# EUROPÄISCHE PATENTANMELDUNG

(11) **EP 2 308 673 A1**
(43) Veröffentlichungstag der Anmeldung: **13.04.2011**
(21) Anmeldenummer: 10175933.0
(22) Anmeldetag: 09.09.2010
(51) Int. Cl.: B31D 3/00, B31F 1/00, B31F 5/02, B32B 3/10, B32B 3/28, B32B 3/30, B65D 63/00, B65D 65/40

(54) **Packstoff, Verfahren zur Erzeugung von Packstoff und Packstofferzeugnis**

(30) Priorität: 30.09.2009 DE 102009045157
(71) Anmelder: Voith Patent GmbH, 89520 Heidenheim (DE)
(72) Erfinder: Nelles, Josef, 52224, Stolberg (DE); Holtwick, Michael, 47665, Sonsbeck (DE)

(57) **Zusammenfassung**

Die Erfindung betrifft einen Packstoff zur Erzeugung von geformten oder ungeformten Verpackungen oder Verpackungselementen, wobei der Packstoff bahnförmig ist und mindestens eine Deckschicht und mindestens eine Funktionsschicht aufweist, ferner ein Verfahren zur Erzeugung eines erfindungsgemäßen Packstoffs und schließlich ein geformtes oder ungeformtes Packstofferzeugnis.

Man möchte einen leicht handhabbaren, insbesondere auf- und abrollbaren, bahnförmigen Packstoff von hoher Widerstandsfähigkeit zur Verfügung stellen.

Bei einem erfindungsgemäßen Packstoff wird dies dadurch erzielt, dass die mindestens eine, der mindestens einen, Deckschicht durch fortlaufende Muster mittels Schwächung oder Trennung segmentiert ist.

## Beschreibung

Die Erfindung betrifft einen Packstoff zur Erzeugung von geformten oder ungeformten Verpackungen oder Verpackungsefementen, wobei der Packstoff bahnförmig ist und mindestens eine Deckschicht und mindestens eine Funktionsschicht aufweist.

Die Erfindung betrifft ferner ein Verfahren zur Erzeugung eines erfindungsgemäßen Packstoffs.

Schließlich betrifft die Erfindung ein geformtes oder ungeformtes Packstofferzeugnis.

Bahnförmiger Packstoff zur Erzeugung von geformten oder ungeformten Verpackungen wird in relativ großen Breiten und quasi endlos produziert. Ein derartiger Packstoff kann aus unterschiedlichen Materialien bestehen und ein oder mehrere Schichten aufweisen. Sind mehrere Schichten vorgesehen, weist das Packmaterial üblicherweise zumindest eine Deckschicht und eine Funktionsschicht auf. Unter einer Deckschicht wird dabei eine äußere Materiallage verstanden, die üblicherweise besonders stabil ausgebildet wird und eine sichtbare Oberfläche aufweist. Unter einer Funktionsschicht wird eine Materiallage verstanden, die mit mindestens einer Deckschicht verbunden ist Häufig ist eine Funktionsschicht auch zwischen zwei Decklagen angeordnet. Dabei können solche Funktionsschichten unterschiedliche Aufgaben Übernehmen. Beilspielsweise können die Funktionsschichten die Stabilität des Packstoffs erhöhen, Volumen schaffen um einem Durchdringen von Fremdkörpern zu begegnen, isolierende Eigenschaften ausüben oder besonders oberflächenschonend gegenüber dem Packgut wirken. Natürlich sind in der Praxis auch eine Vielzahl weiterer Funktionen und insbesondere die Wahrnehmung mehrerer Aufgaben üblich, Packstoff muss daneben möglichst preiswert sein, um die Kosten des von ihm zu schützenden Produkts nicht unnötig zu erhöhen. Dazu soll der Packstoff üblicherweise auch ein geringes Gewicht aufweisen, um anschließende Transportkosten gering halten zu können. Schließlich soll der Packstoff üblicherweise einfach entsorgbar, das heißt in der Regel auch recycelbar, sein. Die Materialien der Deck- und Funktionsschichten werden deshalb als Kompromiss aus den oben genannten Anforderungen ausgewählt. Neben Kunststoff und Metall ist die Packmittefgruppe Papier und Pappe der stärkste Vertreter der Basismaterialien. So werden derzeit rund Zweidrittel aller Transportverpackungen aus Wellpappenkomponenten hergestellt. Wellpappe ist in verschiedenen Ausführungen benannt Die Grundausführung ist die einfachgedeckte oder auch einseitige Weilpappe, bei der eine Deckschicht einseitig mit einer gewellten Papp- oder Papierbahn verbunden ist, die als Funktionsschicht fungiert. Diese Grundausführung ist auch heute noch die verbreiteste Form der Wellpappe. Darauf aufbauend ist auch die zweifachgedeckte oder auch doppelseitige Wellpappe bekannt, bei der die gewellte Papp- oder Papierbahn zwischen zwei Deckschichten eingebunden ist. Handelsüblich wird dieses Prinzip bis zur dreiwelligen Wellpappe verstärkt. Dabei sind verschiedene Wellenarten durch Festlegung von Wellenteilung und Wellenhöhe genormt.

Wegen der großen Verbreitung dieses Packstoffs wird die Erfindung im folgenden anhand von einem Packstoff beschrieben, dessen Basis eine einfache Wellpappe bildet, soll jedoch nicht auf einen Packstoff mit einer derartigen Grundlage beschränkt sein.

Ein derartiger Packstoff, das heißt einseitige Wellpappee bietet neben hoher Flexibilität auch bereits ein gewisses Maß an Schutzeigenschaften, insgesamt jedoch nur ein relativ geringes Maß an Stabilität. Die zweifachgedeckte Wellpappe ist dagegen nicht mehr flexibel genug, um sie beispielsweise in engen Radien zu biegen oder sie aufzurollen.

Der Erfindung liegt nun die Aufgabe zugrunde einen bahnförmigen Packstoff zur Verfügung zu stellen, der leicht handhabbar, insbesondere auf- und abrollbar, und von hoher Widerstandsfähigkeit ist.

Diese Aufgabe wird bei einem Packstoff der eingangs genannten Art dadurch gelöst, dass die mindestens eine der mindestens einen Deckschicht durch fortlaufende Muster mittels Schwächung oder Trennung segmentiert ist.

Auf diese Weise ist der Packstoff gut handhabbar und bietet bereits ein relativ hohes Schutzpotential für das Packgut. Auch ist die Funktionsschicht durch die mindestens eine segmentierte Deckschicht bereits weitgehend geschützt.

Bevorzugt ist die mindestens eine der mindestens einen Deckschicht verstelfbar.

Dabei ist es fallweise vorteilhaft, wenn der Packstoff in sich versteifbar ist, oder unter Zuhilfenahme weiterer Mittel, etwa einer zusätzlichen Deckschicht oder fester oder fluider Haftvermittler, versteifbar ist. Unter festen Haftvermittlern werden dabei insbesondere Klebebänder, thermische Haftvermittler oder ähnliches verstanden. Unter fluiden Haftvermittlern werden flüssige oder sprühnebelartige Haftvermittler verstanden.
Dagegen ist ein Packstoff in sich selbst versteifbar, wenn die einzelnen Segmente unter einer bestimmten Bewegung beziehungsweise Krafteinwirkung miteinander formschlüssig verbindbar gestaltet sind, das heißt sich insbesondere ineinander verketten, verkeilen oder verhaken. Eine solche formschlüssige Verbindung kann, insbesondere bei einer puzzelförmigen Segmentierung auch durch entsprechenden Kraftschluss, insbesondere Reibschluss, unterstützbar sein. Ein Packstoff ist besonders gut versteifbar, wenn die Deckschicht durch Trennung segmentiert ist.

Es ist von Vorteil, wenn mindestens eine der mindestens einen Funktionsschicht biegeelastisch ausgeführt ist.

Auf diese Weise wird die Wickelbarkeit des Packstoffs unterstützt oder, je nach Versteifungsverhältnis zwischen Deck- und Funktionsschicht, erst möglich. Eine biegeelastische Funktionsschicht bietet, durch mindestens eine Deckschicht versteift, ein hohes Schutzpotential für die zu verpackende Ware und kann dazu beitragen Spannungsspitzen zu eliminieren.

Dazu ist es vorteilhaft, wenn die mindestens eine segmentierte Deckschicht um mindestens eine Raumachse und mindestens eine dazwischen angeordnete Funktionsschicht biegbar ist. Mit besonderem Vorteil ist die segmentierte Deckschicht um zwei Raumachsen und mindestens eine dazwischen angeordnete Funktionsschicht biegbar.
Bei einem bahnförmigen Packstoff wird üblicherweise die die Laufrichtung im Herstellungsprozess ais Längsrichtung (hier auch x-Richtung) bezeichnet. Die Breite des bahnörmigen Packstoffs erstreckt sich demgegenüber in Querrichtung (hier auch y-Richtung), während die Stärke der Bahn auch als Höhe (hier auch als z-Richtung) benannt wird.

Auf diese Weise ist der Packstoff auf- und abwickelbar. Somit bietet der Packstoff ideale Voraussetzungen in einem automatisierten Prozess Anwendung zu finden. Insbesondere sind auf diese Weise auch wesentliche Voraussetzungen für einen kontinuierlichen Packprozess erzielbar.
Ein Packstoff, der lediglich um eine Raumachse biegbar ist, ist mit besonders einfachen Mitteln und besonders rasch versteifbar. Es ist etwa denkbar, dass ein solcher Packstoff durch Umlenkung an einer Walze oder in einem Walzenspalt oder einem Langspalt derart versteift wird, dass seine Segmente formschlüssig, oder form- und draftschlüssig miteinander verbunden werden.

Bei Anwendung von Haftvermittlern müssen diese nur in mindestens einer Richtung Kräfte aufnehmen können, sodass beispielsweise einfache Klebestreifen, die senkrecht zu derjenigen Raumachse aufgetragen werden, um die die segmentierte Deckschicht biegbar ist.
Ein der um zwei Raumachsen biegbar ist, ist besonders anpassbar und vielseitig verwendbar. Seine Versteifung ist jedoch entsprechend aufwendiger. Hier bieten sich insbesondere Versteifungen durch eine zusätzliche Deckschicht an.

Es ist bevorzugt, dass benachbarte Segmente der mindestens einen Deckschicht zur Versteifung miteinander verbindbar, insbesondere verklebbar, vernähbar oder verprägbar, sind.

Auf diese Weise ist der Packstoff besonders gut handhabbar und eine genügende Steifigkeit besonders rasch erzeugbar Bei einer Verklebung kann es von Vorteil sein, wenn das benötigte Klebemittel der Deckschicht eigen ist und beispielsweise nur durch Erhitzen aktiviert wird, oder, beispielsweise in Form eines Klebemitteistreifens dem Versteifungsprozess fremd zugeführt wird.

Vorteilafterweise ist die mindestens eine der mindestens einen Deckschicht mittels einer Funktionsschicht oder einer weiteren Deckschicht versteifbar.

Ist die Deckschicht mittels einer weiteren Deckschicht versteifbar, kann sich eine besonders hohe Widerstandsfähigkeit gegenüber dem Eindringen von Fremdkörpern, sozusagen eine besonders hohe Oberflächenhätte des Packstoffes, ausbilden.
Ist der Packstoff mittels einer Funktionsschicht versteifbar, können sich besonders gute Verbindungen zwischen Deck- und Funktionsschicht ausbilden Beispielsweise ist es dazu denkbar, dass die segmentierte Deckschicht im Versteifungsprozess derart ausgerichtet wird, dass der Großteil ihre Segmente sich mindestens stellenweise mit ihren benachbarten Segmenten berühren, Eine zweckmäßige Funktionsschicht kann dann aus einem, vorzugsweise geschäumten, thermoplastischen Elastomer bestehen, dessen - der Deckschicht zugewandte - Randschicht während des Versteifungsprozesses kurzfristig erhitzt wird und damit die Segmente der Deckschicht steif miteinander verbindet.

Es ist also besonders bevorzugt, dass die Funktionsschicht oder die weitere Deckschicht eine Klebeschicht aufweist und insbesondere als ein- oder doppelseitig es Klebeband und/oder als thermischer Haftvermittler ausgebildet ist.

Ferner ist es von Vorteil, wenn die mindestens eine Deckschicht aus einem der folgenden Werkstoffe oder einer Kombinaion aus mindestens zwei der folgenden Werkstoffe besteht;
- Zellfaserstoff, insbesondere Pappe, Papier
- textiler Faserstoff, insbesondere textiles Gewebe
- thermoplastisches Elastomer
- duroplastisches Elastomer
- Aluminium

Faserstoffe bieten erstklassige Möglichkeiten zur bahnförmigen Herstellung von Packstoff. Besonders geeignet sind dazu unterschiedliche Papier- oder Pappsorten, da sie preiswert herstellbar, einfach recycelbar sind und ein günstiges Maß an Elastizität gepaart mit einer relativ hohen Widerstandskraft gegen mechanisches Eindringen und eine hohe Reißfestigkeit aufweisten. In Spezialfällen können jedoch auch textile Faserstoffe, insbesondere textile Gewebe, von Vorteil sein. Besonders Vorteilhaft können auch Deckschichten aus Elastomeren sein. Thermoplastische Etastomere bieten zudem den Vorteil nach einfacher Erhitzung formbar zu sein. Duroplastische Elastomere bieten dagegen die Gruppe, mit den meisten inkompressiblen Elastomeren und sind somit besonders widerstandsfähig. Elastomere Werkstoffe können zur Bildung einer Deckschicht insbesondere in einer folien- beziehungsweise blechartigen Ausbildung oder in Gewebeform Anwendung finden. Zur isolierung können auch Aluminiumfolien oder ähnliche Werkstoffe Einsatz finden.

Darüber hinaus ist es von Vorteil, wenn die mindestens eine Funktionsschicht aus einem der folgenden Werkstoffe oder einer aus mindestens zwei der folgenden Werkstoffe besteht:
- Zellfaserstoff, insbesondere Pappe, Papier
- textiler Faserstoff, insbesondere textiles Gewebe
- thermoplastisches Elastomer, insbesondere geschäumt
- duroplastisches Elastomer, insbesondere geschäumt
- Styropor
- Aluminium

Diese Werkstoffe bieten hervorragende Möglichkeiten, leichte und großvolumige Funktionsschichten eines Packstoffs auszubilden. Bei einem Zellstoff, insbesonder bei Pappe oder Papier, bietet sich ganz besonders die seit Jahrzehnten etablierte Wellenform mit ihren, dem Fachmann hinreichend bekannten, Vorteilen an. Neben diesen bevorzugten Grundstoffen sind Packstoffe mit besonders dämpfenden oder isolierenden Eigenschaften oder Packstoffe, die besonders einfach handhabbar sind unter in Anspruchnahme eines Werkstoffs aus den genannten Gruppen ebenso wirtschaftlich herstellbar.

Mit Vorteil ist dafür gesorgt, dass die mindestens eine Deckschicht eine Beschichtung, insbesondere einen thermischen Haftvermittier, eine Versiegelung oder eine Lackierung aufweist.

Auf diese Weise ist der Packstoff besonders gut geeignet, das Packgut gegen Umwelteinflüsse, insbesondere Feuchtigkeit, zu schützen.

Bevorzugt ist die mindestens eine Deckschicht und/oder die mindestens eine Funktionsschicht kompostierbar oder der Pulpe einer Faserstoffbahn erzeugenden Maschine, insbesondere einer Papiermaschine, zuführbar.

Auf diese Weise sind besonders umweltgerechte und/oder wirtschaftliche Verpackungen mittels des erfindungsgemäßen Packstoffes erzeugbar.

Zur Herstellung eines erfindungsgemäßen Packstoffs wird mindestens eine der mindestens einen Deckschicht vor, während oder nach dem, insbesondere erstmalingen Verbinden, mit der Funktionsschicht segmentiert. Somit stehen den Anforderungen eines erfindungsgemäßen Packstoffes entsprechend eine Vielzahl von wirtschaftlichen Herstellungsprozessen zur Verfügung, Beispielsweise ist es so denkbar, dass einzelne Segmente mit der Funktionsschicht, die dann auch als Trägerschicht dient verbunden werden, und der so entstehende bahnförmige Packstoff zur weiteren Be- oder Verarbeitung in definierte Losgrößen, insbesondere in Wickelform, gebracht wird.
Ebenso kann es von Vorteil sein, wenn Funktions- und Deckschicht zunächst bahnförmig vorliegen und die Deckschicht, während - oder in Bahnlaufrichtung gesehen - nach ihrer Verbindung, segmentiert wird. Wird die Deckschicht nach dem Verbinden segmentiert ist es bevorzugt, dass die Deckschicht fortlaufend derart geschwächt oder getrennt wird, dass ein entsprechender Abschnitt unmittelbar, dass heißt innerhalb von 60 Sekunde nach Ausbildung der dortigen Verbindung mit der Funktionsschicht, von seinem nachfolgenden Abschnitt separiert wird.

Psckstofferzeugnisse aus einem erfindungsgemäßen Packstoff sind den Anforderungen des Packgutes anpassbar und in einem kontinuierlichen Packprozess an oder um das Packgut anlegbar

Die Erfindung wird im Folgenden anhand bevorzugter Ausführungsbeispiele in Verbindung mit den Zeichnungen näher beschrieben, Hierin zeigen schematisch und unmaßstäblich:
- Fig.1: eine Wellpappe mit einer schuppenförmigen zweiten Deckschicht,
- Fig. 2: eine Wellpappe mit einer durchgehenden zweiten Deckschicht,
- Fig.3: eine Wellpappe mit einer schuppenförmigen zweiten Deckschicht, wobei benachbarte Schuppen vernäht sind,
- Fig. 4: einen Ausschnitt aus Fig. 3
- Fig. 5: eine Wellpappe deren Deckschicht miteinander verprägbare Segmente aufweist
- Fig. 6: Wellpappe, die eine Deckschicht aufweist, deren Segmente unter Ausbildung einer, im wesentlichen bündigen, Oberfläche miteinander versteifbar sind
- Fig. 7: Weihappe, die eine Funktionsschicht aufweist, mittels derer die Deckschicht versteifbar ist

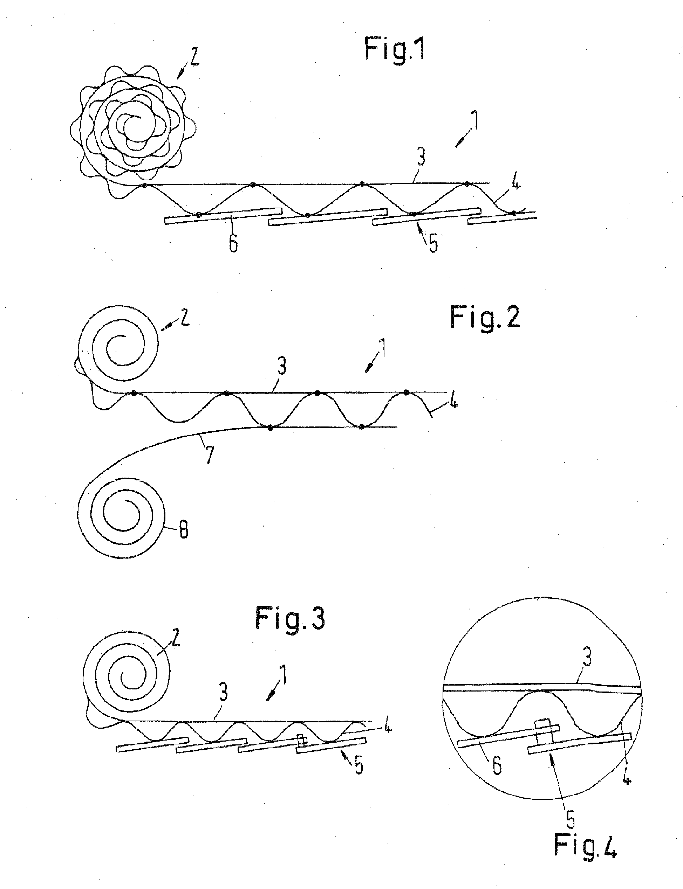

In Fig. 1 ist bahnförmiger Packstoff 1 in Form einer Wellpappe dargesteilt, die als Rollenware von einer Vorratsrolle 2 abgezogen wird und im Anschluss an die Vorratsrolle 2 eben ausgebreitet wird. Die Wellpappe 1 weist eine erste Deckschicht 3 auf, mit der eine gewellte Zwischenlage 4 verkiebt ist. Die Klebestellen sind als Punkte dargestellt. An einer von der ersten Deckschicht 3 abgewandten Seite der gewellten Zwischenlage 4 ist die Zwischenlage 4 mit einer schuppenförmigen zweiten Deckschicht 5 verbunden, wobei die Zwischenlage 4 und die Deckschicht 5 bei diesem Beispiel miteinander verklebt sind. Die zweite Deckschicht 5 weist dabei mehrere Schuppen 6 auf, wobei jedem Wellenberg der Zwischenlage 4 eine Schuppe 6 zugeordnet ist. Benachbarte Schuppen 6 überlappen sich dabei dachziegelartig, wobei eine Durchbiegung der Wellpappe 1 um die erste Deckschicht 3 möglich ist und in der entgegengesetzten Richtung durch die Schuppen 6 verhindert wird, indem ein Ende der Schuppen gegen die Verbindungsstelle der benachbarten Schuppen mit der Zwischenlage 4 stößt. In Fig. 1 ist also eine Wellpappe 1 dargestellt, die in eine Richtung biegesteif ist.

Durch Verbinden benachbarter Schuppen 6 miteinander wird die in Fig. 1 dargestellte Wellpappe 1 in beide Richtungen biegesteif, da eine Relativbewegung zwischen benachbarten Schuppen 6 verhindert wird.

In Fig. 2 ist eine zweite Ausführungsform der Wellpappe 1 dargestellt, in der gleiche Elemente mit den gleichen Bezugszeichen wie in Fig. 1 versehen sind. Die Wellpappe 1 ist als einseitige Wellpappe auf der Vorratsrolle 2 gelagert und wird von dieser abgezogen. In der gezeigten Ausführungsform ist nur auf einer Seite der ersten Deckschicht 3 eine Zwischenlage 4 angeordnet. Es ist auch denkbar, die erste Deckschicht 3 an beiden Seiten mit jeweils einer Zwischenlage 4 zu versehen. Nach dem Abziehen der Wellpappe 1 von der Vorratsrolle 2 wird auf die Zwischenlagen 4 eine zweite durchgehende Deckschicht 7 angebracht, die von einer Vorratsrolle 8 abgezogen wird. Bei dem gezeigten Ausführungsbeispiel wird die zweite Deckschicht 7 im Bereich der Wellenberge der Zwischenlage 4 mit der Zwischenlage 4 verklebt. Allerdings sind auch andere Verbindungsverfahren So kann die zweite Deckschicht 7 beispielsweise auch mit der Zwischenlage 4 vernäht oder verprägt werden.

In Fig. 3 ist eine Wellpappe 1 dargestellt, die im Wesentlichen der Wellpappe 1 der Fig. 1 entspricht. Allerdings sind benachbarte Schuppen 6 der schuppenförmigen zweiten Deckschicht 5 nach dem Abziehen der Wellpappe 1 von der Vorratsrolle 2 miteinander vernäht worden. Dies ist insbesondere in der Detailansicht der Fig. 4 zu erkennen.
Für die zweite Deckschicht wird vorteilhafter Weise eine Materialbahn aus Testliner oder Kraftliner verwendet, die beispielsweise PE beschichtet ist. Wenn die Stirndeckel höhere Kräfte aushalten sollen, ist es zweckmäßig, zwei gewellte Zwischenlagen zu verwenden, die zunächst an einer als ausgebildeten ersten Deckschicht angeordnet sind und so auf einer Vorratsrolle aufgewickelt sind. Jede Zwischenlage wird dann nach dem Abziehen von der Vorratsrolle mit einer weiteren Deckschicht versehen, so dass eine sehr steife Wellpappe erhalten wird. Die Wellpappe mit den Deckschichtn und den Zwischenlagen wird in der Regel aus Papier oder Karton hergestellt. Aber auch andere Materialpaarungen sind denkbar.

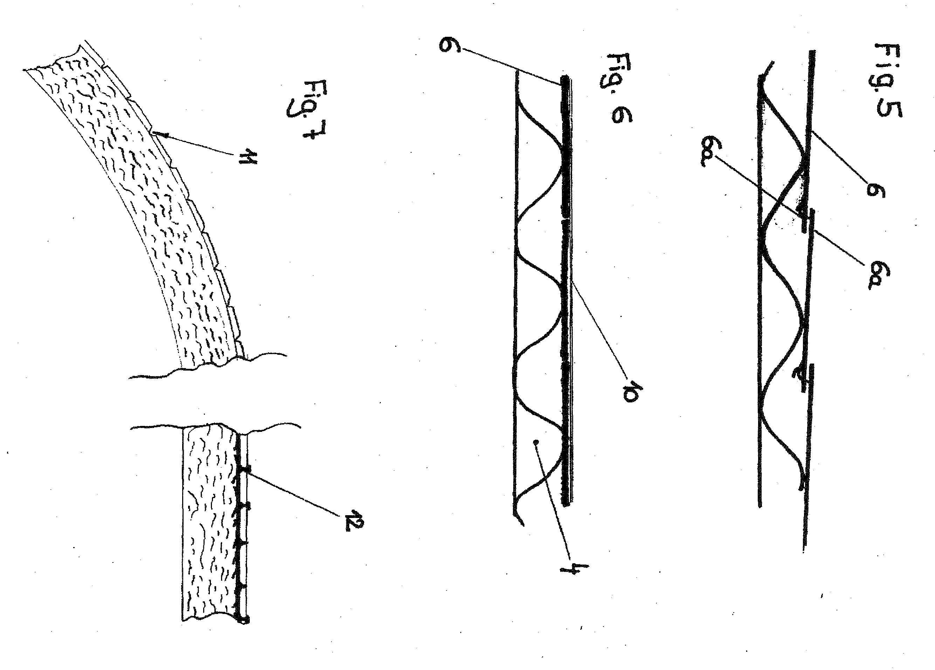

In Fig 5 ist nun ein Packstoff 1 in Form einer Wellpappe dargestellt, deren Dechschicht 3 Segmente 6 aufweist, die miteinander verprägbar sind. Dazu weisen die einzelnen Segment 6 bevorzugt Schwächungen oder Vorprägungen 9 auf, die in Formschluss miteinander bringbar sind. Dazu kann es ausreichen, dass der auf eine Vorratsrolle aufgewickelte bahnförmige Packstoff 1 mindestens abschnittsweise in eine lineare Bahnlaufrichtung verbracht wird. Dabei können sich die in Kontakttretenden Segnientabschnitte 6a formschlüssig miteinander verbinden, Ebenso ist es denkbar, dass sich vorzugsweise Überlappende Segmentabschnitte 6a mittels Fremdeinwirkung, insbesondere mittels einer nicht dargestellten Verprsgevorrichtung, in Formschluss miteinander bringbar sind.

Demgegenüber ist in Figur 6 ein Packstoff 1 dargestellt, dessen Deckschicht 3 derart segmentiert ist, dass die einzelnen Segmente 6 zur Ausbildung einer ebenen Oberfläche geeignet sind und im dargestellten Fall von ihrer äußeren Seite her, dass heißt von der der Funktionsschicht 4 abgewandten Seite her, mit einem Klebemittelstreifen 10 verbunden worden sind. Dabei können auch mehrere Klebemittelstreifen 10 zum Einsatz kommen. Alternativ zu dem dargestellten Klebemittelstreifen 10 kann auch eine zweite Deckschicht zur Versteifung der segmentierten Deckschicht 3 dienen.

In Figur 7 ist ein erfindungsgemäßer Packstoff 1 dargestellt, dessen Funktionsschicht 4 aus einem thermoplastischen Elastomer besteht, wobei das Thermoplast zur Votumengewinnung geschäumt, oder auf andere Weise mit Lufträumen versehen, sein kann. Mit der thermoplastischen. Funktionsschicht 4 sind Segemente 6 punkt- oder linienförmig verbunden. Wie im linken Bereich der Figur dargestellt, bilden die Segmente 6 an ihren äußeren Rändern Freiräume 11 aus, wenn der Packstoff 1 beispielsweise in aufgewickeltem Zustand, eine bogenförmige Bahn annimmt. Wird der Packstoff 1 gestreckt, wird er also mindestens abschnittsweise auf einen linearen Bahnverlauf gebracht, schließen sich die Freiräume 11. Während dessen wird die Funktionsschicht 4 kurzfristig erhitzt. Besonders bevorzugt kann die Funktionsschicht 4 dazu mit einer nichtdargestellten Heizeinrichtung, beispielsweise einem Laserstrahler oder einer induhtlonsheizung, deckschichtenseitig energiebeaufschlagt. Der kurz anschmelzende Thermoplast bildet eine zunächst viskose Grenzschicht 12 aus, die mindestens teilweise die Freiräume 11 zwischen den einzelnen Segmenten 6 füllt und mit den Unterseiten der Segmente 6 flächig eine stoffschlüssige Verbindung eingeht. Nach Wiederaushärtung der Grenzschicht 12 ist die Deckschicht 3 und damit auch der Packstoff 1 versteift und hoch widerstandfähig.

### Bezugszeichenliste

- 1: Packstoff / Wellpappe
- 2: Vorratsrolle
- 3: Deckschicht
- 4: Zwischenlage
- 5: Deckschicht
- 6: Segmente / Schuppen
- 6a: Segmentabschnitt / Schuppenabschnitt
- 7: Deckschicht
- 8: Vorratsrolle
- 9: Schwächung / Vorprägung
- 10: Klebemittelstreifen
- 11: Freiraum
- 12: Grenzschicht

## Patentansprüche

1. Packstoff zur Erzeugung von geformten oder ungeformten Verpackungen oder Verpackungselementen, wobei der Packstoff bahnförmig ist und mindestens eine Deckschicht und mindestens eine Funktionsschicht aufweist,
**dadurch gekennzeichnet, dass**
die mindestens eine der mindestens einen Deckschicht durch fortlaufende Muster mittels Schwächung oder Trennung segmentiert ist,

2. Packstoff nach Anspruch 1,
**dadurch gekennzeichnet, dass**
die mindestens eine der mindestens einen Deckschicht versteifbar ist.

3. Packstoff nach Anspruch 2,
**dadurch gekennzeichnet, dass**
mindestens eine der mindestens einen Funktionsschicht biegeelastisch ausgeführt ist,

4. Packstoff nach einem der vorhergehenden Ansprüche,
**dadurch gekennzeichnet, dass**
die mindestens eine segmentierte Deckschicht um mindestens eine Raumachsen und mindestens eine dazwischen angeordnete Funktionsschicht biegbar ist.

5. Packstoff nach einem der vorhergehenden Ansprüche,
**dadurch gekennzeichnet, dass**
benachbarte Segmente der mindestens einen Deckschicht zur Versteifung miteinander verbindbar, insbesondere verklebbar, vernähbar oder verprägbar, sind.

6. Packstoff nach einem der vorhergehenden Ansprüche,
**dadurch gekennzeichnet, dass**
die mindestens eine der mindestens einen Deckschicht mittels einer Funktionsschicht oder einer weiteren Deckschicht versteifbar ist.

7. Packstoff nach dem vorhergehenden Anspruch,
**dadurch gekennzeichnet, dass**
die Funktionsschicht oder die weitere Deckschicht eine Klebeschicht aufweist und insbesondere als ein- oder doppelseitiges Klebeband und/oder als thermischer Haftvermittier ausgebildet ist.

8. Packstoff nach einem der vorhergehenden Ansprüche, **dadurch gekennzeichnet, dass**
die mindestens eine Deckschicht aus einem der folgenden Werkstoffe oder
einer Kombinaion aus mindestens zwei der folgenden Werkstoffe besteht:
- Zellfaserstoff, insbesondere Pappe, Papier
- textiler Faserstoff, insbesondere textiles Gewebe
- thermoplastisches Elastomer
- duroplastisches Elastomer
- Aluminium

9. Packstoff nach einem der vorhergehenden Ansprüche,
**dadurch gekennzeichnet, dass**
die mindestens eine Funktionsschicht aus einem der folgenden Werkstoffe oder einer Kombination aus mindestens zwei der folgenden Werkstoffe besteht:
- Zellfaserstoff, insbesondere Pappe, Papier
- textiler Faserstoff, insbesondere textiles Gewebe
- thermoplastisches Elastomer, insbesondere geschäumt
- duroplastisches Elastomer, insbesondere geschäumt
- Styropor
- Aluminium

10. Packstoff nach einem der vorhergehenden Anspfüche,
**dadurch gekennzeichnet, dass**
die mindestens eine Deckschicht eine Beschichtung, insbesondere einen thermischen Haftvermittler, eine Versiegelung oder eine Lackierung aufweist.

11. Packstoff nach einem der vorhergehenden Ansprüche,
**dadurch gekennzeichnet, dass**
die mindestens eine Deckschicht und/oder die mindestens eine Funktionsschicht kompostierbar oder dem Pulp einer Faserstoffbahn erzeugenden Maschine, insbesondere einer Papiermaschine, zuführbar ist

12. Verfahren zur Erzeugung eines erfindungsgemäßen Packstoffs,
**dadurch gekennzeichnet, dass**
die mindestens eine Deckschicht vor dem Verbinden mit der mindestens einen Funktionsschicht segmentiert wird.

13. Verfahren zur Erzeugung eines erfindungsgemäßen Packstoffs,
**dadurch gekennzeichnet, dass**
die mindestens eine Deckschicht während dem Verbinden mit der mindestens einen Funktionsschicht segmentiert wird.

14. Verfahren zur Erzeugung eines erfindungsgemäßen Packstoffs,
**dadurch gekennzeichnet, dass**
die mindestens eine Deckschicht nach dem Verbinden mit der mindestens einen Funktionsschicht segmentiert wird.

15. Geformtes oder ungeformtes Packstofferzeugnis,
**dadurch gekennzeichnet, dass**
es einen Packstoff nach einem der Ansprüche 1 bis 11 aufweist.
